(19) Europäisches Patentamt
European Patent Office
Office européen des brevets

(11) **EP 2 056 203 B1**

(12) **EUROPEAN PATENT SPECIFICATION**

(45) Date of publication and mention
of the grant of the patent:
**01.12.2010 Bulletin 2010/48**

(51) Int Cl.:
***G06F 12/02*** *(2006.01)*

(21) Application number: **08008767.9**

(22) Date of filing: **09.05.2008**

(54) **Data writing method**

Datenschreibverfahren

Procédé d'écriture de données

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **30.10.2007 JP 2007281471**

(43) Date of publication of application:
**06.05.2009 Bulletin 2009/19**

(73) Proprietor: **Hagiwara Sys-Com Co. Ltd.
Nagoya-shi,
Aichi-ken 460-0003 (JP)**

(72) Inventors:
• **Oribe, Hiromichi
Nagoya-shi
Aichi-ken 460-0003 (JP)**
• **Takikawa, Masaki
Nagoya-shi
Aichi-ken 460-0003 (JP)**
• **Kitou, Yoshihiro
Nagoya-shi
Aichi-ken 460-0003 (JP)**

(74) Representative: **Wiebusch, Manfred
Ter Meer Steinmeister & Partner GbR
Artur-Ladebeck-Strasse 51
33617 Bielefeld (DE)**

(56) References cited:
**WO-A-2004/059651      US-A1- 2004 186 946
US-A1- 2007 214 309**

**Description**

[Technical Field]

The present invention relates to a method for writing data to a NAND flash memory and more specifically to a method for writing data by using a cache memory.

[Background Art]

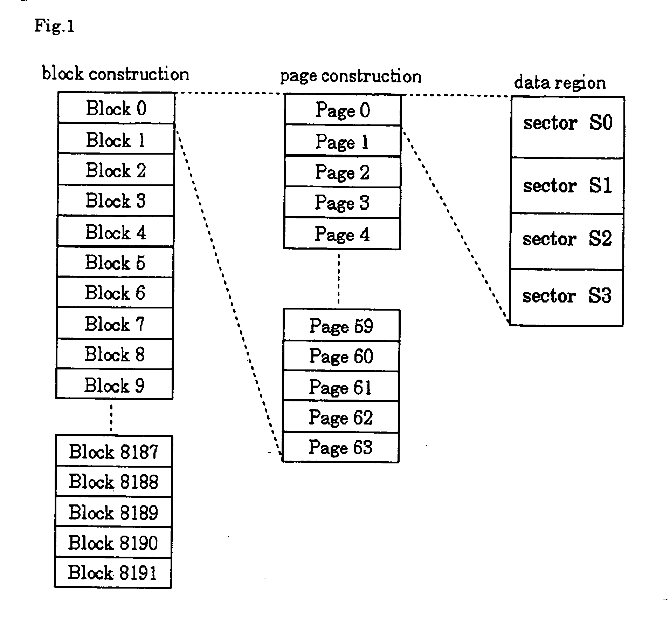

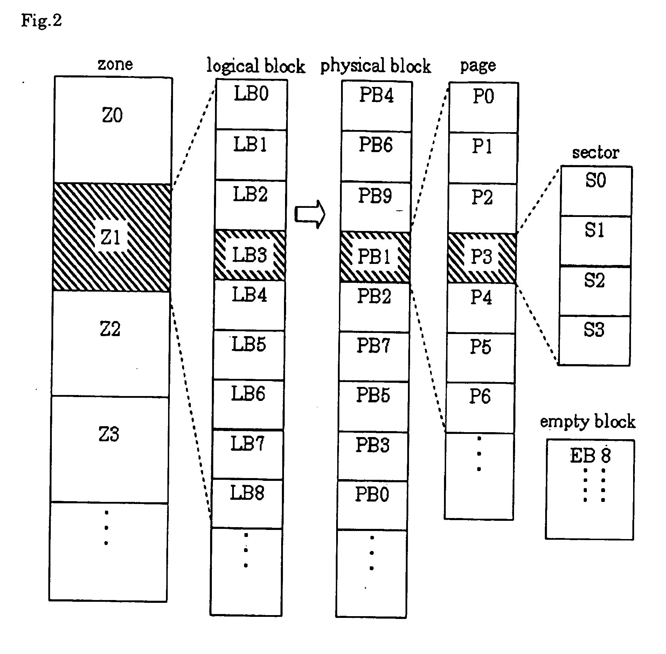

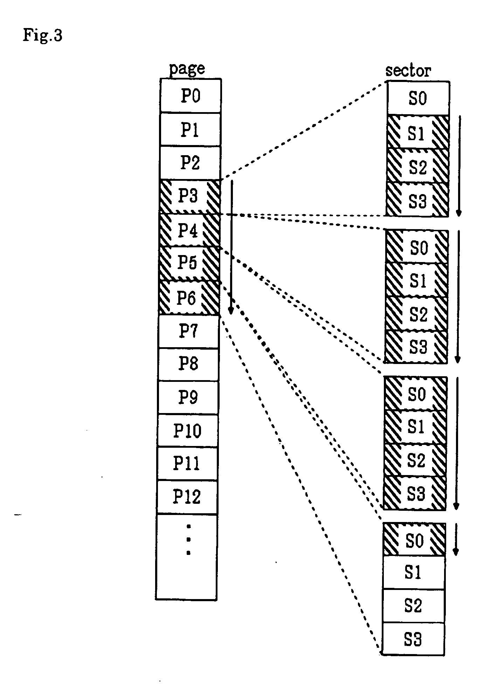

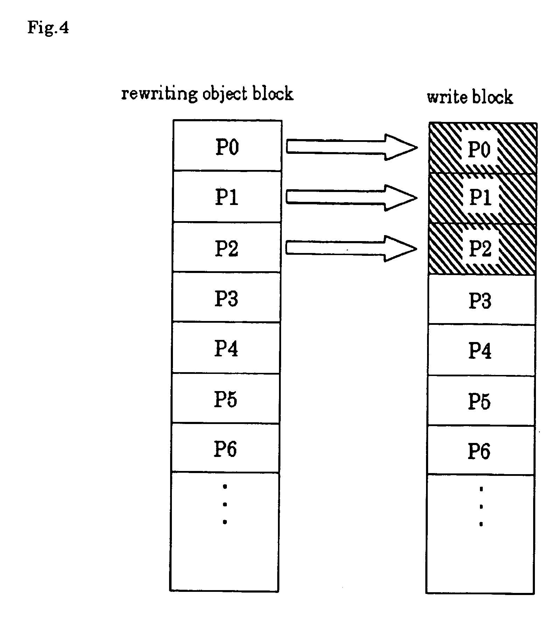

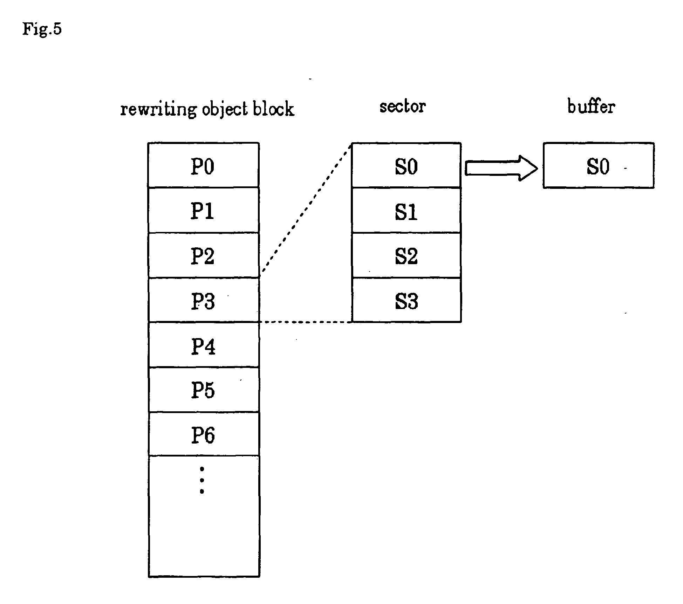

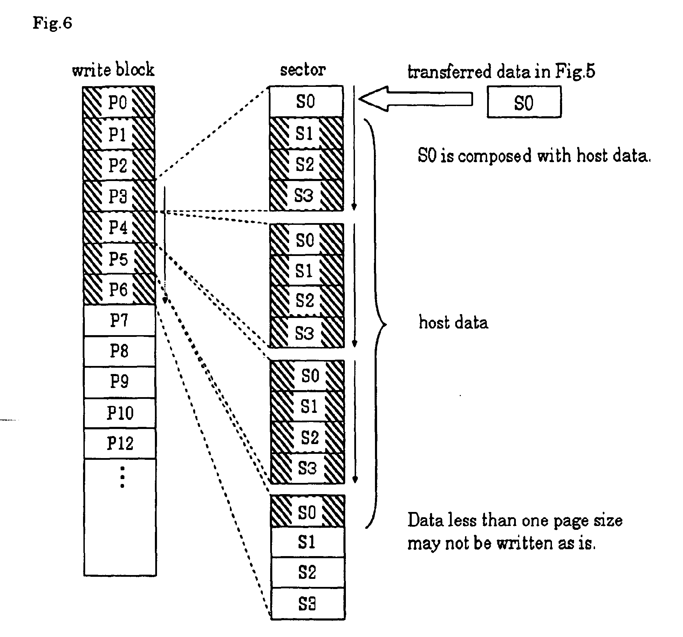

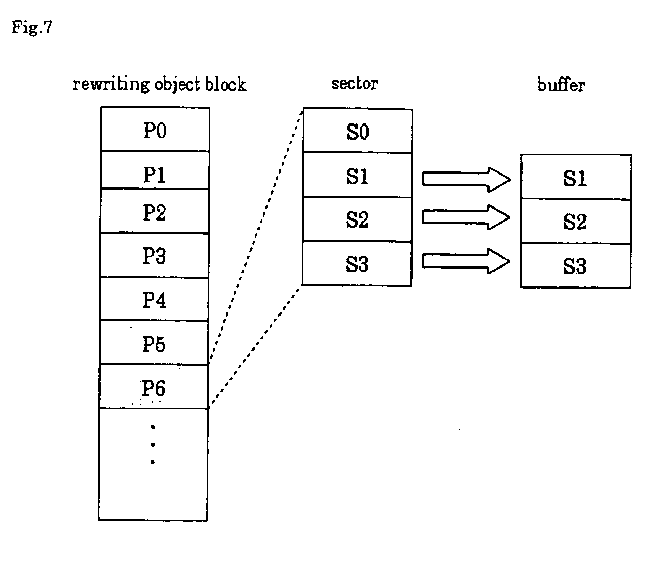

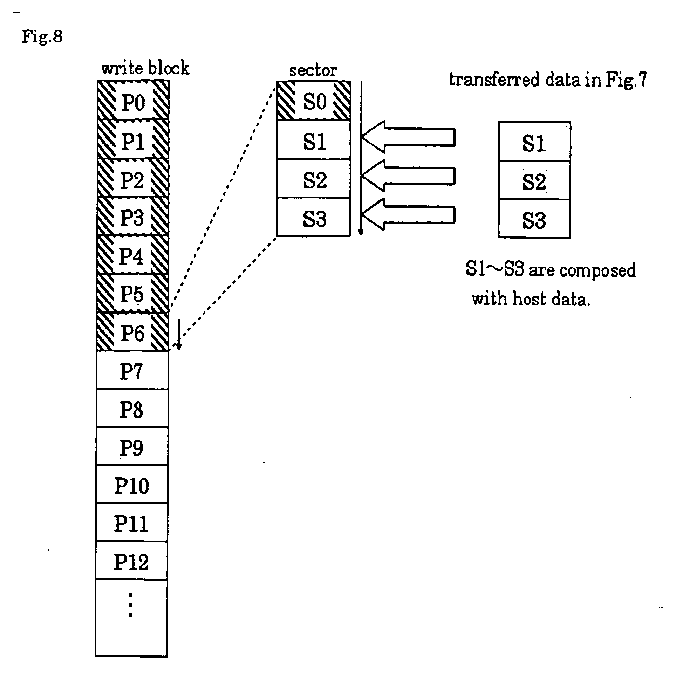

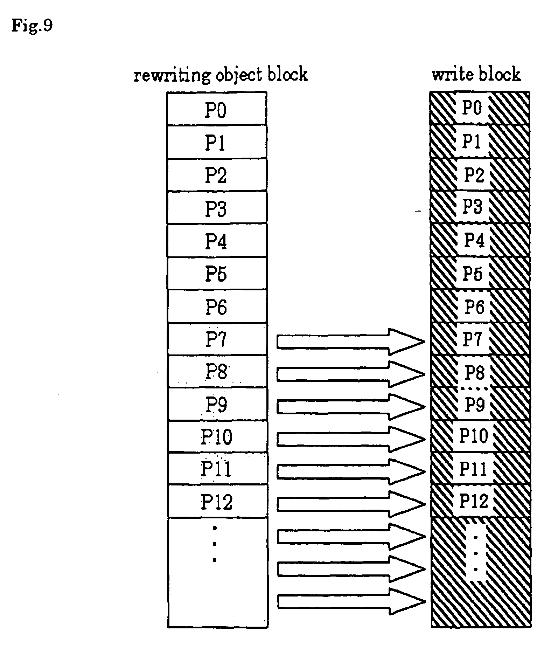

A prior art method for writing data to a flash memory will be explained at first. The NAND flash memory has a structure as shown in Fig. 1 for example and executes data writing (called also "programming") and reading in units of pages and erases data in units of blocks. In case of the example shown in Fig. 1, the NAND flash memory is composed of 8192 blocks (physical blocks) and one block is composed of 64 pages. Furthermore, one page has a configuration having four sectors in total by counting 512 bytes of user data and 16 bytes of ECC (Error Check Code) and management information, i.e., 528 bytes in total, as one ECC sector (ECC sector will be called simply "sector" in the present application).
A physical block address of the NAND flash memory is managed in correlation with a logical block address. When a host makes the NAND flash memory execute the data writing and/or reading operation, the host specifies its object address to the NAND flash memory (this address specified by the host is called "host LBA" in general). At this time, a controller of the NAND flash memory recognizes the host LBA as a logical block address of the NAND flash memory and finds a physical block address of the NAND flash memory corresponding to that logical block address by making reference to a table representing a correlation between the logical block address and the physical block address (it will be called "logical block - physical block conversion table" in the present application). Then, the controller confirms, on the basis of the physical block address, the page and the sector of the physical block which the host specifies as a beginning point concerning data writing and/or reading data (see Fig. 2). It is noted that the host notifies a data size to be written (how many sectors) together with the host LBA.
When a data write command is given from the host, it is necessary to rewrite data in units of blocks by combining data not required to be rewritten and the rewriting data sent from the host into an empty block within the NAND flash memory. A writing process in case when the host issues a command to write data of twelve (12) sectors (the number of sectors to be written from the host LBA as the head address) will be explained later in conjunction with the drawings.
Assume now that the sector from which the data rewriting has to be done is found, by the host LBA, to be a second sector (S1) of a fourth page (P3) of the physical block address 1 (PB1) as shown in Fig. 3. Then the controller firstly searches an empty block not correlated with the logical block address (this will be called "write block"). The empty block, i.e., EB 8 shown in Fig. 2, will be used here) and next, copies data of P0, P1 and P2 of PB1 that should not be rewritten, to the write block (see Fig. 4). Because the rewriting has been done from data of sector S1 in the P3 of PB1 in this example, the controller reads data of sector S0 from P3 in the PB1 so as to transfer them once to a buffer (see Fig. 5). Next, the controller copies the data that had been transferred to the buffer, to the portion of S0 of the fourth page (P3) of the write block (EB 8) in accordance with a NAND flash memory protocol and writes eleven sectors of the write data sent from the host, from the portion of S1 in the P3 of the EB 8 (see Fig. 6). Because the final data of the twelfth sector are data that could not be written independently to a portion S0 of the seventh page (P6) of EB 8, sector data from S1 to S3 of the P6 of PB1 are transferred once to the buffer (see Fig. 7). Then, the controller writes the data of the twelfth sector sent from the host to a portion of sector S0 in the P6 of the write block (EB 8) and next, transfers the data that have been transferred to the buffer from PB1, to the portion of sector S1, S2 and S3 of the write block (see Fig. 8).
Then, the controller copies the data from P7 to the final page of the PB1 to the EB 8 (see Fig. 9). Then, the controller erases the whole data written in the PB1, updates the logical block - physical block conversion table and ends the process of one data write command from the host.
By the way, the NAND flash memory executes the write process described above every time when the host issues the write command in case of the NAND flash memory. Therefore, it takes time for the write process. Still more, because a life of the NAND flash memory depends on the number of times of data writing and erasing operations, there is a problem that it is difficult to prolong the life of the NAND flash memory by the conventional method that frequently executes those operations. Japanese Patent Application Laid-Open No. 2000-349853, Japanese Patent Application Laid-Open No. 2001-273776. and Japanese Patent Application Laid-Open No. 2006-323739 are documents that reflect the prior art.
Methods according to the preamble of claim 1 are disclosed in US 2004/186946 A1 and WO 2004/059651 A.

[Disclosure of the Invention]

[Objects which the Invention intends to solve]

The invention solves the problem of providing a method for writing data to the NAND flash memory that is fast and is capable of reducing a burden posed on the NAND flash memory and on a controller for controlling it. Another object is to optimize a duty cycle of data-transfer from a cache memory to the flash memory. Other objects(s) will become obvious from the specification, drawings and specifically from claims of the present application.

[Means for Solving the Objects]

In order to solve the aforementioned object, the invention, as specified in claim 1, provides a method for writing data to the NAND flash memory by saving data that have been write-commanded from the host once in a cache memory. That is, it is possible to reduce a write time and to prolong a life of the NAND flash memory without posing an excessive burden on the NAND flash memory and on the controller for controlling the NAND flash memory by interposing the cache memory between the host and the NAND flash memory, by saving the data sent one after another from the host once in segments of the cache memory, and by writing the write-command data to the specified logical block together.

The data writing method further comprises the following steps executed by a CPU:

1) recording, in at least one virtual segment that is identified by a virtual segment number and starting with a segment number "0", the writing status of data which are to be written into the physical segments of the cache memory pursuant to a first write-command issued from the host after the data writing system has been turned ON, and

  a) recording an upper LBA (Logical Block Address) and a group LBA of the written data in a tag memory in correlation with the virtual segment number;
  b) recording, in the tag memory and in correlation with the virtual segment number, the fact that the data related to the virtual segment number are valid; and
  c) setting an LRU (Least Recently Used) number for the virtual segment and recording the LRU number in the tag memory;

2) when a subsequent data write command is issued from the host, said write command specifying further write data having an upper LBA, searching the tag memory; and

  a) when there is found a virtual segment having the same upper LBA as the further data,

    a-1) overwriting the data that are related to that physical segment; and
    a-2) for all virtual segments whose LRU number is smaller than that of the found segment, incrementing the LRU number by one, setting the LRU number of the found segment to "0", and recording the updated LRU numbers in the tag memory;

  b) when there is no virtual segment having the same upper LBA as the further data and there is an empty virtual segment,

    b-1) executing data writing to the empty physical segment; and
    b-2) when there is no virtual segment having the same group LBA, setting to "0" the LRU number of a virtual segment corresponding to the physical segment to which the new data are written, and incrementing by one the LRU numbers of all other existing virtual segment(s), if any, and recording the updated LRU numbers in the tag memory;
    b-3) when there is a virtual segment having the same group LBA, setting the LRU number of the virtual segment, into which the new data-writing-status is recorded, to the LRU number of said virtual segment having the same group LBA, incrementing by one the LRU numbers of all virtual segments whose LRU number is smaller than that of the virtual segments having the same group LBA, resetting the LRU numbers of the two segments that have the same group LBA to "0", and recording the updated LRU numbers in the tag memory;

3) repeating step (2) until the data writing to the physical segments reaches a predetermined threshold value for the number of physical segments.

More specific optional features of the invention are indicated in the dependent claims. Preferably, a feature of the method of the invention is that the cache memory is composed of an aggregate of physical segments whose size is the product of one page sector size of the NAND flash memory and the m-th power of 2 (m is 0 or a positive integer), and a CPU records and manages, in units of sector, status of data writing to each physical segment.

After the system is turned ON, the CPU writes a write-commanded data from the host sequentially to the physical segment of the cache memory. The size of the physical segment is composed of the product of one page sector size of the NAND flash memory and the m-th power of 2 (m is 0 or a positive integer). When the NAND flash memory of which one page is composed of four sectors is used, one physical segment may be composed of any sizes of four sectors, eight sectors, 16 sectors, 32 sectors, 64 sectors, 128 sectors and the like. At this time, the CPU records the status of data written to the physical segment into virtual segment(s) being prepared in a sector map table within a cache manager in order to manage the status of the written data of the cache memory. The CPU records the data writing status of one physical segment into the corresponding virtual segment in units of sector. The CPU manages the virtual segments by denoting its number (virtual segment Number).

The write-command is given by notifying a host LBA and a data length. The host LBA shall be notified as "OAC3h" (h represents a hexadecimal notation) herein.

Suppose now that one physical segment has a size of 16 sectors. Accordingly, one virtual segment records the data writing status of 16 sectors in units of sector (this will be called "16 sectors applicability"). Accordingly, one virtual segment is divided into 16 parts and is managed by local addresses from its head. The head sector address is "0h" and the final sector address is "Fh". On the contrary, a possible value of a final digit of the host LBA also takes from "0h" to "Fh". That is, both of them are equal. Therefore, after data writing, the CPU records the data writing status from the sector address "3h" of the virtual segment. This recording is carried out by setting a flag (bit "1") in a pertinent address of the virtual segment.

The "upper LBA" is a logical address of the head sector of the virtual segment on the condition that it recognizes the record starting position as the host LBA. When the virtual segment is composed of the 16 sectors, a possible value of the lower two digits of the upper LBA is "00h", "10h", ---- , "F0h" (16 ways in total), so that the upper LBA is "0AC0h" in this case. The CPU records the data writing status into the virtual segment and at the same time records the "upper LBA" and the "group LBA" (described next) into the tag memory within the cache manager by correlating with the virtual segment number.

The "group LBA" is determined by the number of sectors of one physical block of the flash memory. In the case one physical block is composed of 64 pages and one page is composed of four sectors for example, the number of sectors of one physical block is 256. This is also applicable to the logical block, in a case the logical block corresponds to the physical block in one-to-one relationship. Therefore, the two lower digits (from ."00h" to "FFh") of the host LBA can express all sector addresses of one logical block. Accordingly, values excluding the two lower digits of the host LBA correspond to the logical block number of the flash memory. Accordingly, when the host LBA is 0AC3h as described above, the "group LBA" becomes its two head digits, i.e., "0A".

In case that the virtual segment is composed of "32 sectors applicability", it is divided into 32 parts so as to record twice of the data writing status for the case of "16 sectors applicability". In this case, a possible value of two lower digits of the "upper LBA" becomes 8 ways in total, i.e. "00h", "20h", "40h", "60h", "80h", "A0h", "C0h" and "E0h".

In the case of "32 sectors applicability", if the host LBA is "0AD3h", the upper LBA is set to the virtual segment as "0AC0h" in the tag memory and the 20th position ((F+3)h) from the head of the virtual segment corresponds to the host LBA, and the 20th position becomes the position where the recording of the data writing status is started.

The CPU also sets the LRU (Least Recently Used) No. "0" to the virtual segment number "0" and sets the data of the physical segment which is the basis of the records of the virtual segment to "valid (value = "1")", and at the same time records them into the tag memory. The CPU sets the LRU No. in order to handle the whole virtual segments whose group LBA is the same, as a "same LRU group".

The LRU No. is incremented by one (1), starting from "0", according to the order of the recording into the virtual segment. When there exists a plurality of virtual segments whose group LBA is the same, the same LRU No. is set for all of them. At a moment of data writing (data purge) to the NAND flash memory from the cache memory, the first priority is given to such a physical segment for which the corresponding virtual segment has the largest LRU No..

When a data write command is issued continuously from the host and there is an existing virtual segment whose upper LBA is the same as that of the write-commanded data, the CPU overwrites the data to the physical segment corresponding to the existing virtual segment and updates its virtual segment on the sector map table. And the CPU sets the LRU No. "0" to the existing virtual segment and adds a "1" to the LRU No. that is set to virtual segment(s), if any, whose LRU No. is smaller than the previous LRU No. of the existing virtual segment, and records the updated LRU No(s). into the tag memory.

When there is no virtual segment having the same upper LBA and there is an empty virtual segment, CPU executes the data writing to the empty physical segment.

Then, if there is no existing virtual segment whose group LBA is the same, the CPU sets the LRU No. "0" to a virtual segment of the physical segment to which the new data is written, and adds a "1" to the LRU No. of other whole existing virtual segment(s), if any, and records the updated LRU No(s). into the tag memory.

If there is an existing virtual segment whose group LBA is the same, the CPU sets the LRU No. to the virtual segment into which the new data-writing-status is recorded, to a value of the existing virtual segment having the same group LBA, and afterwards changes both LRU Nos. to "0", and adds a "1" to the LRU No(s). that is (are) set to virtual segment(s) whose LRU No. is smaller than the previous LRU No. of the existing virtual segment, and records the updated LRU No(s). into the tag memory.

The CPU executes the abovementioned steps until the writing of data to the physical segment reaches the predetermined address (threshold value) of the virtual segment. This threshold value may be set to the final virtual segment number or less than it.

Thereby, the LRU No. of a virtual segment (including another virtual segment having the same group LBA if it exists) recording the status of data of the physical segment into which the oldest data were written becomes largest and the LRU No. of a virtual segment (including another virtual segment having the same group LBA if it exists) recording the status of data of the physical segment into which the newer data are written becomes smaller. When the CPU executes the writing of data into the flash memory after that, the CPU can uniquely determine its writing sequence by using this LRU No. That is to say, data of the physical segment that is the basis of the records of the virtual segment whose LRU No. is larger than others has precedence concerning its data writing procedure to the flash memory.

It is noted that when the data having the same upper LBA as an existing virtual segment's is write-commanded from the host, the commanded data is overwritten into the virtual segment for which the value of the upper LBA is set. However, a final result of history of the physical segment to which data has been overwritten is recorded into the sector map table until the data of the physical segment that is the basis of the records of the virtual segment is written to the flash memory. Thereby, when the data transferred to the flash memory thereafter, the CPU can surely transfer the data of the physical segment that is the basis of the records of the virtual segment towards the side of the flash memory on the basis of the information of the final result and information recorded in the tag memory. When the CPU transfers the data towards the side of the flash memory, the CPU issues a command to the flash memory by using the information recorded in the sector memory and the information of the tag memory.

Furthermore, according to this method, the data of all physical segments that are the basis of the records of the virtual segments having the same LRU No. are composed of data for the same data rewriting object blocks (logical block) of the flash memory, so that it is possible to process a plurality of write-commands from the host altogether and to reduce a write time and to prolong the life of the flash memory.

In one embodiment, the following steps are performed when the data writing to the physical segment has reached said threshold value:

4-1) canceling the LRU numbers of all said virtual segments having the largest LRU number, and setting a queue value "0" for these segments, and recording the queue values in the tag memory;
4-2) transferring the data of all physical segments that are related to the virtual segments having the queue value "0" to the flash memory (21);
4-3) setting a new queue value "0" for the virtual segment(s) whose LRU number is then the largest.

When the data writing to the cache memory reaches a predetermined number of physical segments (threshold value), data purge is executed from the physical segment to which the data was written, towards the side of the flash memory.

In this case, the CPU sets each physical segment in which the LRU No. is set to be largest to "queue state "(Lock = 1) and records it into the tag memory. The queue state means that the data stored in the physical segment which is the basis of the records of the virtual segment is determined to be written to the flash memory. Accordingly, after the queue value is set, overwriting of data to the physical segment is prohibited until the queue state is canceled again. At this time, the CPU cancels the LRU No. set for a virtual segment of the largest LRU No., replaces it, sets a queue value "0" anew and records it into the tag memory. When the queue value is set, the CPU transfers the data in the whole physical segment that is the basis of the records of the virtual segment for which the queue value is set towards the side of the flash memory. By this manner, it is possible for the CPU to write next write-commanded data immediately to the empty physical segment. Also, by means of setting, at the time just before completing the transfer of the data towards the side of the flash memory, a new queue value "0" for the virtual segment whose LRU No. is largest and repeatedly executing it thereafter in the same manner, it is possible to optimize a duty cycle of data-transfer from the cache memory to the flash memory.

[BRIEF DESCRIPTION OF DRAWINGS]

Fig. 1 shows an exemplary data structure of a NAND flash memory.

Fig. 2 shows an example of the relationship between a host LBA and a physical block.

Fig. 3 shows a conceptual diagram of data rewriting in the NAND flash memory.

Fig. 4 shows a procedure for writing data to an empty block (No. 1).

Fig. 5 shows a procedure for writing data to an empty block (No. 2).

Fig. 6 shows a procedure for writing data to an empty block (No. 3).

Fig. 7 shows a procedure for writing data to an empty block (No. 4).

Fig. 8 shows a procedure for writing data to an empty block (No. 5).

Fig. 9 shows a procedure for writing data to an empty block (No. 6).

Fig. 10 shows an exemplary page structure of the NAND flash memory.

Fig. 11 shows an example of the system structure of this invention.

Fig. 12 shows a hardware structure of a cache manager.

Fig. 13 shows an example of the first state which is diagrammatically representing contents of a tag memory and a sector map.

Fig. 14 shows an example of the second state which is diagrammatically representing contents of the tag memory and the sector map.

Fig. 15 shows an example of the third state which is diagrammatically representing contents of the tag memory and the sector map.

Fig. 16 shows an example of the fourth state which is diagrammatically representing contents of the tag memory and the sector map.

Fig. 17 shows an example of the fifth state which is diagrammatically representing contents of the tag memory and the sector map.

Fig. 18 shows an example of the sixth state which is diagrammatically representing contents of the tag memory and the sector map.

Fig. 19 shows an example of the seventh state which is diagrammatically representing contents of the tag memory and the sector map.

Fig. 20 shows a data flow from host to NAND flash memory.

[Best Mode for Carrying Out the Invention]

While the best mode for carrying the invention will be explained below with reference to the drawings, it may be needless to say that the present invention, as defined in the claims, may be carried out in various modes and is not limited to the embodiments described below.

(Exemplary Structure on the Data Region of the NAND Flash Memory)

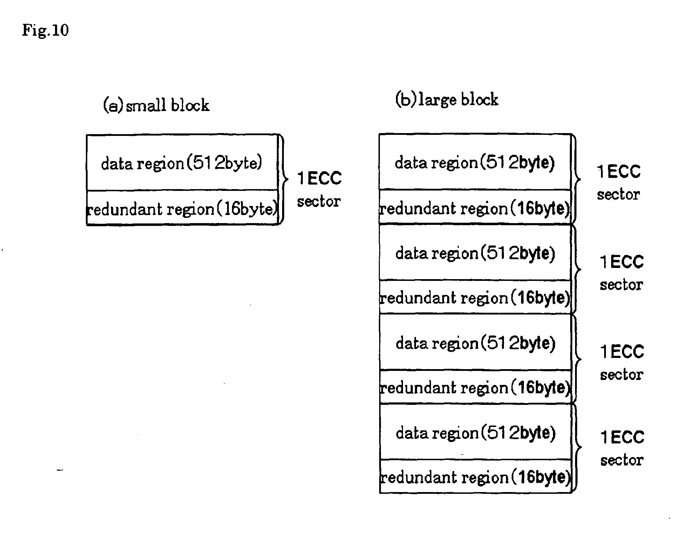

At first, an exemplary structure of a page of a flash memory will be explained with reference to Fig. 10 before explaining a method of the invention. The flash memory has a kind of Multi-Level Cell (MLC) large block, beside a Single-Level Cell (SLC) small block and a Single-Level Cell (SLC) large block. The SLC is characterized by its binary cell. On the contrary, the MLC is characterized by its multi-value cell. In the SLC small block, one page is composed of one sector, i.e., a data region of 512 bytes and a redundant region of 16 bytes (see Fig. 10a) and one block is composed of 16 pages or 32 pages. In the SLC large block, one page is composed of four sectors for example and one block is composed of 64 pages. In the MLC large block, one page may be also composed of four sectors (see Fig. 10b) and one block may be composed of either 64 pages or 128 pages. While the method of the invention is applicable to both the SLC memory and the MLC memory, a case of using the SLC large block in which one page is composed of four sectors and one block is composed of 64 pages will be explained in the present embodiment unless specifically noticed.

(Example of System Structure)

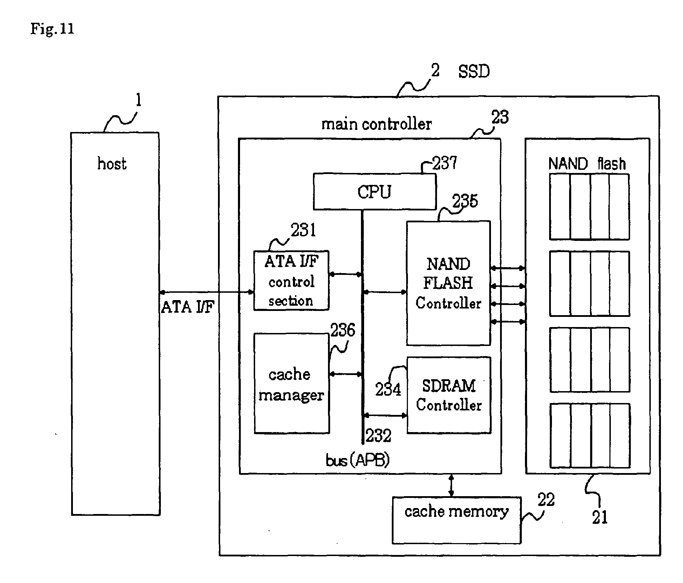

A system for carrying out the method of this invention will be explained with reference to Fig. 11. The method of the invention may be carried out by the system composed of a host 1 and an SSD (Solid State Disk) 2 connected with the host 1 by an ATA interface for example. The SSD 2 is composed of NAND flash memories 21 (the NAND flash memory will be simply referred to as a flash memory hereinafter), a cache memory 22 for temporarily saving data sent from the host 1, and a main controller 23 for controlling operations such as writing of data stored in the cache memory 22 to the NAND flash memory 21. When a command of reading data stored in the NAND flash memory 21 is issued from the host 1, the main controller 23 also executes a control for sending the data to the host 1.

The cache memory 22 may be composed of an SDRAM (Synchronous DRAM) for example. The NAND flash memory 21 and the main controller 23 may be composed of either individual ICs or as one package. The SSD 2 may have a structure physically independent of the host 1 or may be composed in a substrate type so as to be removable from the host 1 and to be able to readily replace with a new one when the life of the NAND flash memory 21 ends. The cache memory 22 comprises an aggregate of segments (these segments will be called "physical segments" in order to distinguish from "virtual segments" hereafter). In a case of using the SLC large block whose one page is composed of four sectors and one block is composed of 64 pages, i.e. 256 sectors in total, the size of one physical segment may be composed of the product of one page sector size of the NAND flash memory 21 and the m-th power of 2. This can be shown as follows:

$$\text{One physical segment size of the cache memory}$$

$$= \quad \text{one page sector size of the NAND flash memory} \quad \times \quad 2^m$$

(m = 0 or an integer less than 7 in this embodiment)

That is to say, one physical segment may have a size of 4 sectors (m=0), 8 sectors (m=1), 16 sectors (m=2), 32 sectors (m=3), 64 sectors (m=4), 128 sectors (m=5) or 256 sectors (m=6). The present embodiment will be explained by assuming that one physical segment is composed of 16 sectors (m=2) hereinafter. A CPU 237 manages each physical segment by its own address.

The main controller 23 includes the following components, i.e., a NAND flash controller 235 for controlling operation of writing/reading data to/from the NAND flash memory 21 on the basis of a NAND protocol, an ATA interface controlling section 231 for controlling communications at taking write-commanded data from the host 1 within the SSD 2 on a basis of an ATA command, a bus 232, an SDRAM controller 234 for physical controlling as to transferring the data sent from the host 1 via the ATA interface controlling section 231 and the bus 232 to the cache memory 22, the CPU 237 and a cache manager 236 for executing managements of writing data sent from the host 1 to the cache memory 22 and of sending the data from the cache memory 22 to the NAND flash memory 21 on the basis of commands from the CPU 237. It is noted that the CPU 237 totally manages each block described above within the main controller 23. The CPU 237 also has a program code storing portion (not shown) and stores computer programs (firmware) for executing the method of the invention. It also has a RAM portion as a work area. The NAND flash controller 235 includes an error correcting circuit which creates an error correcting code of writing data sent from the cache memory 22 to the NAND flash memory 21, and writes the error correcting code to a redundant region of each sector of the NAND flash memory 21.

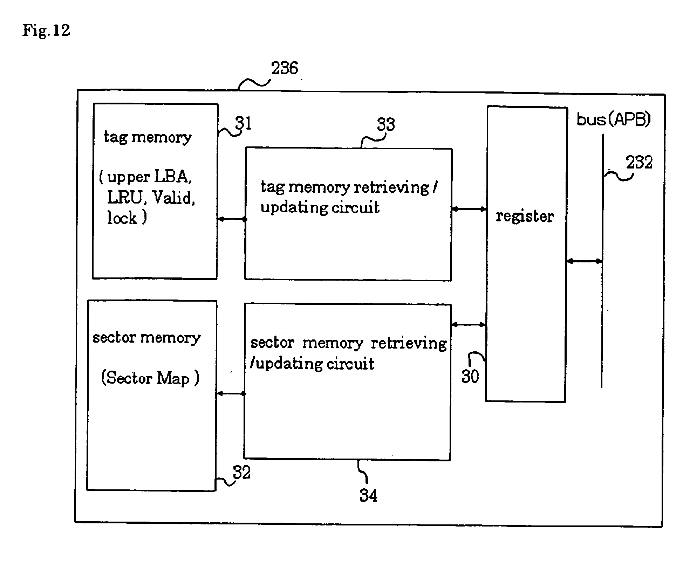

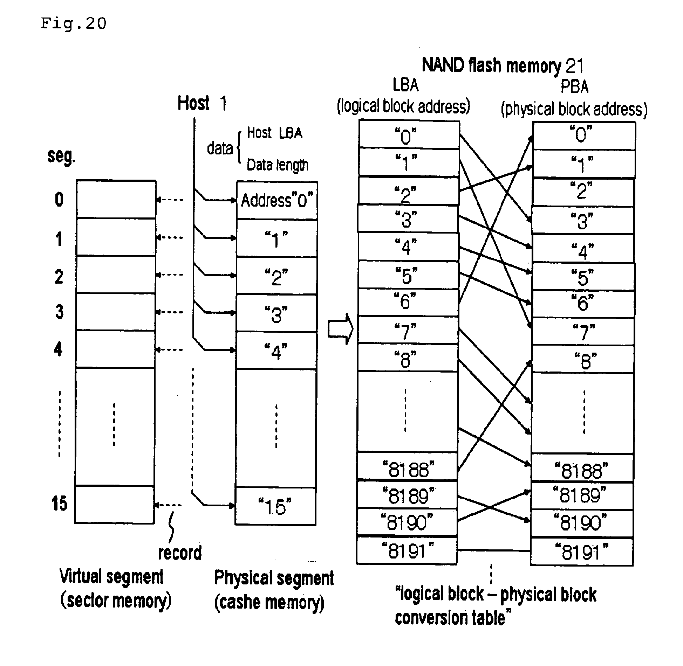

Fig. 12 shows a hardware structure of the cache manager 236. The cache manager 236 has a tag memory 31, a sector memory 32, a tag memory retrieving/updating circuit 33, a sector memory retrieving/updating circuit 34 and a register 30 connected with the bus 232. The tag memory 31 is composed of recording information such as upper LBA, group LBA, LRU No., setting written data as valid (valid = 1) or invalid (Valid = 0), setting a queue value determining whether data are set as a queue (Queue state) (Lock = 1) or not (Lock = 0), and the like. Its detail will be described later. The tag memory retrieving/updating circuit 33 is a circuit being designed for writing the information described above into the tag memory 31, and updating and retrieving the information set in the tag memory 31 in accordance with a command sent from the CPU 237 via the register 30. It may be composed of using hardware. A sector map table is provided in the sector memory 32. The sector map table composes a sector map into which the CPU 237 records a status of written data of the physical segment, updates it in real time and retrieves its state after that. The sector map table is composed of an aggregate of multiple virtual segments denoted by serial numbers. The virtual segment is element into which the CPU 237 records the data writing status of the physical segment in unit of sector. The number denoted to the virtual segment shall be called "virtual segment number" in the present application. The sector memory retrieving/updating circuit 34 records the data writing status into the sector map table, updates it and retrieves the table after that in accordance with a command sent from the CPU 237 via the register 30. The sector memory retrieving/updating circuit 34 may be also composed of using hardware. It is noted, detail will be described hereafter, that the CPU 237 transfers the data of the physical segment towards the side of the NAND flash memory 21 on the basis of the information in the sector map. The physical segment address and the virtual segment number are to be handled preferably by fixedly correlating in one-to-one relationship with each other (see Fig. 20). The CPU 237 transfers the data from the physical segment towards the side of the NAND flash memory 21 on the basis of this correlation. The virtual segments are provided for all physical segments for data storing in the cache memory 22.

(Explanation of Operation)

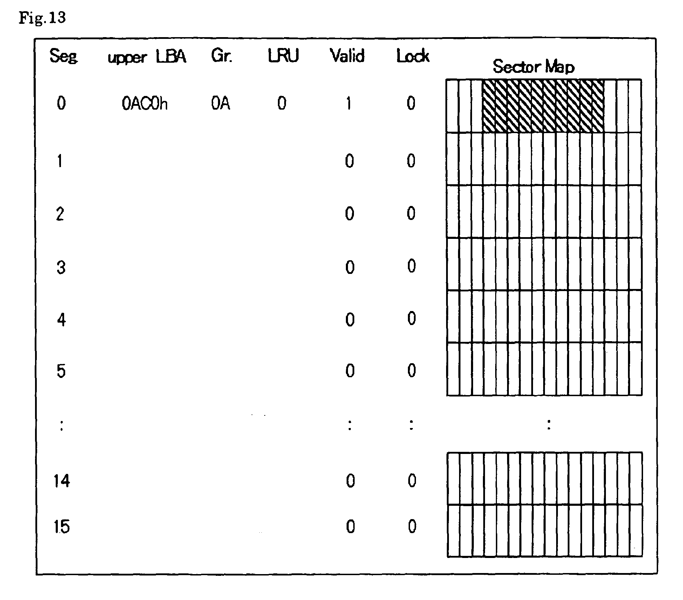

Fig. 13 diagrammatically shows contents recorded into the tag memory 31 together with contents recorded into the sector memory 32. The right side of the Fig. 13 shows the sector map into which the state of written data to the physical segment is recorded, on the other hand, the left side shows information recorded into the tag memory 31. In the Fig. 13, "Seg." expresses the virtual segment and the numbers below represent virtual segment numbers. As shown in the Fig. 13, the serial virtual segment numbers start from "0" as the head number.

In this embodiment, the physical segment address and the virtual segment number are handled by means of being fixedly correlated in one-to-one relationship to one another. As mentioned above one physical segment is composed of 16 sectors (m=2), accordingly one virtual segment is divided into 16 parts in order to record the amount of 16 sectors of data stored in the physical segment. This will be called as "16 sectors applicability" hereinafter. In this embodiment as a matter of convenience, the sector map table is explained so as to being comprised of 16 virtual segments in total. In this point, it will be understandable that one virtual segment may be composed any of 32-sectors-applicability, 64-sectors-applicability, 128-sectors-applicability or 256-sectors-applicability by adapting to its correlating physical segment size.

(A-1: First Data Writing)

After turning the system ON, the CPU 237 sequentially writes the data which are firstly write-commanded from the host 1 to the physical segment starting from its address "0". Then, the data writing status in the physical segment address "0" are recorded into the virtual segment number "0" of the sector map table.

Fig. 13 shows that a data amount of 10 sectors is written to the physical segment address "0" in such a case that the Host LBA is notified as "OAC3h" (h represents hexadecimal notation) and its status is recorded into the virtual segment number "0".

In the case of "16 sectors applicability" (divided into 16 parts), this number of "16" coincides with a possible range of a value of a final digit of the host LBA. That is to say, the CPU 237 records the above mentioned data writing status, the amount of 10 sectors, into the virtual segment "0" starting from its sector address "3h" to "Ch"(see Fig. 13). This recording may be carried out by setting a flag (bit "1") at the pertinent sector address in the virtual segment. A part colored in gray in the virtual segment in Fig. 13 indicates that such a flag was set.

In connection with this, the CPU commands the tag memory retrieving/updating circuit 33 to record an upper LBA and a group LBA related to the writing data to the virtual segment number "0" into the tag table of the tag memory 31.

The upper LBA of the host LBA (OAC3h) is "OAC0h" in this case. That is to say, the upper LBA is a head position (sector address) of the virtual segment into which the data writing status is recorded. The upper LBA is uniquely determined by the host LBA.

In a case that the virtual segment is composed of 32 sectors, the lower two digits of upper LBA takes 00h, 20h, 40h, 60h, 80h, A0h, C0h and E0h (eight in total).

And then, if the host LBA is "3BD3h" for example, one will be able to understand that the 20th sector address of the virtual segment in which the upper LBA is defined as "3BC0h" corresponds the host LBA.

Meanwhile, the group LBA is determined by the number of sectors per one physical block of the flash memory. For example, because one physical block is composed of 256 sectors in a case that one physical block is composed of 64 pages and one page is composed of four sectors, the amount of addresses of one physical block can be expressed of two lower digits from "00h" to "FFh" of the host LBA. In other words, the value excluding the two lower digits corresponds to the logical block number of the flash memory (wherein, the logical block corresponds to the physical block in the one-to-one relationship). This is exactly the group LBA in this embodiment. In the case that the host LBA is "OAC3h" as described above, the group LBA is its two head digits, i.e., "OA".

When the data written status is recorded into the virtual segment number "0", the CPU still records the fact in the tag memory 31 that the data written status recorded into the virtual segment is "valid" (Valid value = 1). It is noted that when the system is turned ON, all virtual segments are initialized to be "invalid" (Valid value = 0).

The tag table also includes an entry "Lock". Lock is used when the CPU 237 determines to transfer the written data of one or more physical segments towards the side of the NAND flash memory 21 and sets a queue value for its corresponding virtual segments. That is, when the CPU 237 sets the queue value, at the same time it sets Lock = 1. When the CPU 237 sets Lock = 1 for a certain virtual segment, the CPU 237 will not overwrite data to the physical segment corresponding to the virtual segment even if the SSD 2 is commanded to write the data to the physical segment later. It is noted that when the system is turned ON, all virtual segments are initialized with Lock = 0.

Still more the CPU 237 also sets a LRU (Least Recently Used) No. to "0" for the virtual segment number "0" and records it in the tag table of the tag memory 31. LRU No. is a sequential, number starting from "0". that defines a writing sequence in which the data are written into the physical segments corresponding the respective virtual segments. The detail will be shown below.

When the data sent from the host 1 cannot be fully written to the physical segment address "0", that is, the amount of the data is larger than 16 sectors, the data are written to the next physical segment address "1". Then, the data writing status is recorded in the virtual segment number "1". It will be understood that the upper LBA of the virtual segment number "1" becomes "0AD0h" at this time. But the group LBA for both, the virtual segment number "0" and the virtual segment number "1" is set to "0A", i.e., the same LRU No. is set. It is noted that, unless specifically noticed, a case that data write-commanded from the host 1 can be written into one physical segment will be explained in the following embodiment.

(A-2: Succeeding Data Writing)

When the host 1 issued a next data-writing command to the SSD 2, the CPU 237 makes the tag memory retrieving/updating circuit 34 to retrieve the tag memory 31. Then, when the tag memory retrieving/updating circuit 34 found a virtual segment which has the same upper LBA as the data being write-commanded (retrieval result = hit), the data are overwritten in a physical segment correlating with the hit virtual segment. After that, the CPU 237 updates the LRU No. of the overwritten virtual segments number to "0" and records it in the tag table of the tag memory 31. Then, when there is a virtual segment whose LRU No. is smaller than the previous LRU No. of the overwritten virtual segment, the CPU 237 adds a "1" to each LRU No. of those virtual segments and records it in the tag table of the tag memory 31.

(A-3)

When the tag memory retrieving/updating circuit 34 found no virtual segment which has the same upper LBA as the data being write-commanded (retrieval result = miss) and the tag memory retrieving/updating circuit 34 found empty virtual segment(s), the CPU 237 executes the writing of data to the empty physical segment and records the written data status into a virtual segment correlating with the physical segment. Then, the CPU 237 records the upper LBA and group LBA of the data written to the empty physical segment into the tag table of the tag memory 31. The CPU 237 also records the fact that the data written to the physical segment are "Valid" (value = 1). Then if there is no existing virtual segment whose group LBA is the same, the CPU sets the LRU No. to "0" for the virtual segment corresponding to the physical segment to which the new data are written, and adds a "1" to the LRU No. of other whole existing virtual segment(s), if any, and records the updated LRU No(s). in the tag memory. On the other hand, if there is an existing virtual segment whose group LBA is the same, the CPU sets the LRU No. of the virtual segment into which the new data-writing-status is recorded, to a value of the existing virtual segment having the same group LBA, then changes both LRU Nos. to "0", and adds a "1" to the LRU No. of those virtual segment(s) whose LRU No. is smaller than the previous LRU No. of the existing virtual segment, and records the updated LRU No (s). in the tag memory.

The CPU executes the above steps until the data writing to the physical segment reaches a predetermined virtual segment (threshold value). This threshold value may be set either to a part of the way to the final virtual segment or on the final virtual segment number.

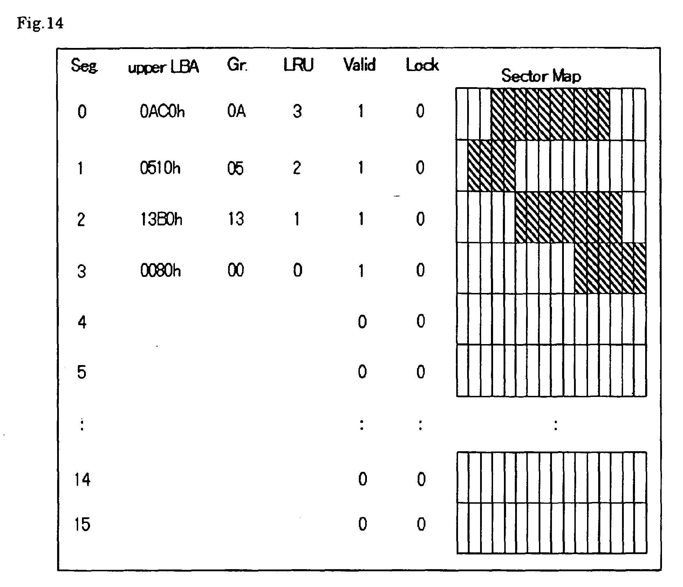

The transition state described above will be explained by using drawings. Fig. 14 shows an example of the state that, following Fig. 13, the data writing to the physical segment was executed up to the physical segment address "3", and consequently its new data status was recorded in the virtual segments "1", "2" and "3" sequentially.

In this example, the data whose host LBA is 0511h and whose data length is 5 sectors was written to the physical segment address "1", the data whose host LBA is 13B5h and whose data length is 10 sectors was written to the physical segment address "2" and the data whose host LBA is 008Ah and whose data length is 6 sectors was written to the physical segment address "3". The virtual segment ("0") that contains the oldest data has the largest LRU No. "3", and the virtual segment ("3") that contains the newest data has the smallest LRU No. "0".

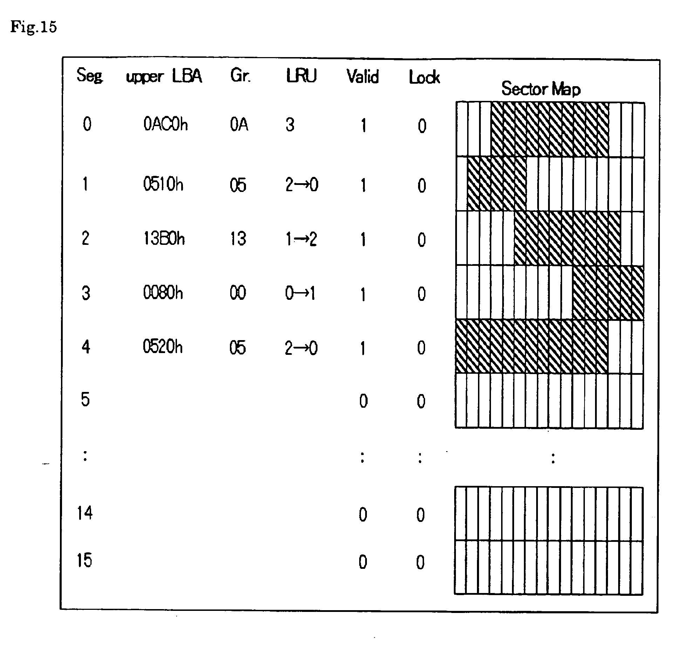

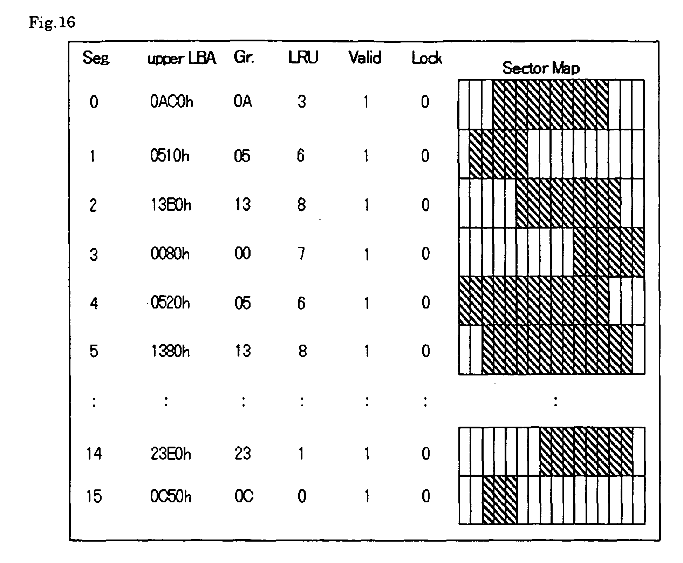

Fig. 15 shows a state that the data whose host LBA is "0520h" and whose data length is 13 sectors was written to the physical segment address "4" after the state shown in Fig. 14. Because the "group LBA" of the virtual segment number "1" and of the virtual segment number "4" is the same, these compose the same LRU group. Accordingly, the CPU 237 sets the LRU No. of the virtual segment number "4" to "2" which is the LRU No. of the existing segment number "1", and afterwards the CPU 237 updates the both LRU Nos. to "0" (see Fig. 15) and records it in the tag table of the tag memory 31. Then, for the two virtual segments "2" and "3", whose LRU Nos. are smaller than the previous LRU No. ("2") of the virtual segment number "1", the CPU 237 adds a "1" to the LRU Nos., and records the new LRU Nos. in the tag table of the tag memory 31. Fig. 15 shows that the LRU No. "1" of the virtual segment number "2" was updated to "2" and the LRU No. "0" of the virtual segment number "3" was updated to "1". Fig. 16 shows an example of the state in which still more the data of from the physical segment address "5" to the physical segment address "15" have been written and their status has been recorded in the corresponding virtual segments.

(Process after Cache Memory filled)

When the CPU 237 executes the data writing to the physical segment until the physical segment is filled, the CPU 237 sets Lock = 1 (the queue state) to the virtual segment whose LRU No. has the maximum value (all if there are a plurality of the virtual segments being set to the same group LBA), and records it in the tag memory 31. Thereby, even if new data whose upper LBA is the same as that of an existing data-written physical segment are sent from the host 1, the new data are not overwritten in the existing physical segment. That is, the data of the physical segment is protected. Then, the CPU 237 cancels the LRU Nos. of all the virtual segments whose LRU Nos. had been set to maximum, sets a queue value "0" a new and records all this in the tag memory 31. The "Queue" means that the data writing to the flash memory is in the state of queue. The CPU 237 commands the NAND flash controller 235 to write the data stored in the physical segment correlating with the virtual segment to the NAND flash memory 21 in turn from the smallest queue value, i.e. "0". This is executed on the basis of the pertinent information recorded in the tag memory 31 and the sector memory 32. This process will be shown by using the drawings.

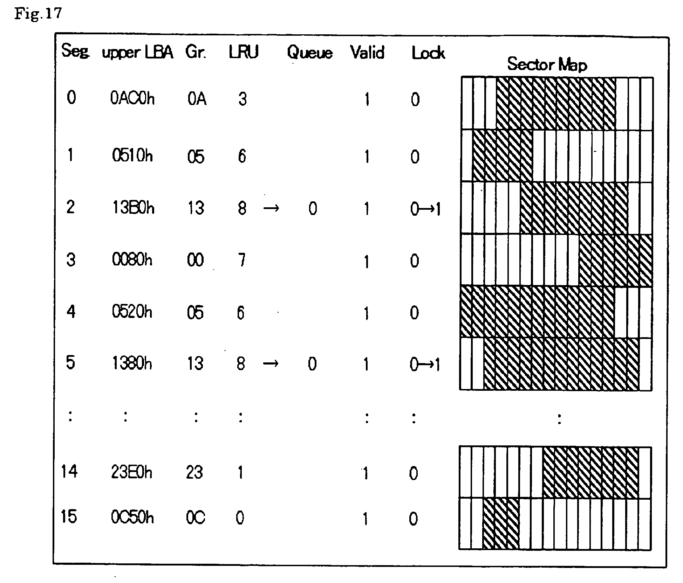

Fig. 17 shows the state, after the state shown in Fig. 16. of the tag table at the time of a data purge from the physical segment which is the basis of the record of the virtual segment (the process of transferring data stored in the physical segment(s) towards the side of the NAND flash memory will be called "data purge" or simply "purge" in the present application). At the data purge, the CPU 237 sets the Lock (set lock = 1) disabling overwrite for the virtual segments whose LRU No. is largest (the virtual segment number "5" and the virtual segment number "2"), cancels both LRU Nos. and sets a new queue value "0".

Then, the CPU 237 searches the physical block address of the NAND flash memory corresponding to the group LBA (logical block address) by referring to the "logical block - physical block conversion table" (see Fig. 20) and transfers the data stored in each physical segment correlating with the virtual segment number "2" and the virtual segment number "5" whose queue value is set "0" to the NAND flash controller 235 by specifying the physical block address. Then the NAND flash controller 235 writes the data to the NAND flash memory 21. While the basic procedure for data writing to the NAND flash memory 21 is carried out as described in the Background Art in this application, the method of the present invention is **characterized in that** multiple write-commanded data from host 1 are written to one physical block of the NAND flash memory 21 all at once. This procedure will be explained in detail.

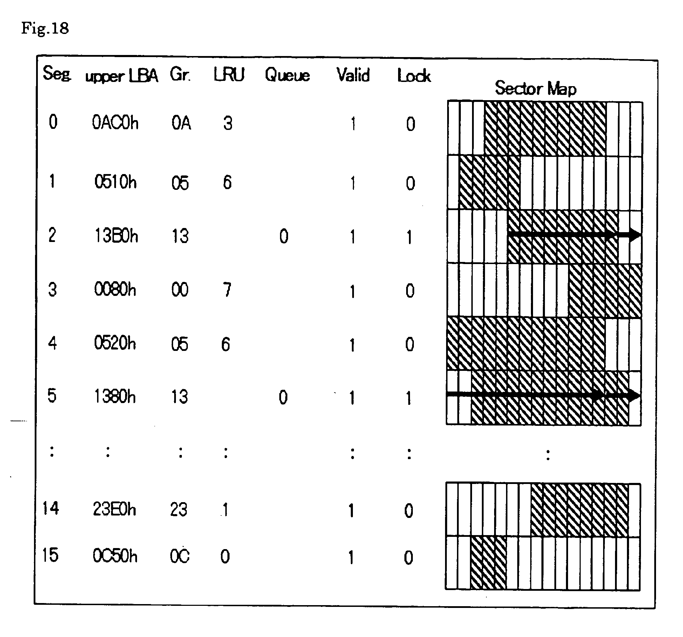

At first, the CPU 237 commands the NAND flash controller 235 to write data transferred from the two physical segments to the specified physical block address of the NAND flash memory 21. Then, the NAND flash controller 235 copies the data that need not be rewritten into a certain empty physical block of the NAND flash memory 21 in units of pages as described in "Background Art", and writes transferred data to the block in units of pages. When writing of the data being transferred from the physical segments starts or ends on the way of a page, the NAND flash controller 235 organizes the data to the form of one page by utilizing the buffer as explained in the "Background Art" and afterwards writes the organized data into the empty block. When the NAND flash controller 235 completes writing of data to the empty block, it erases the whole data in the physical segment to make the block empty, and rewrites the logical block - physical block conversion table. It becomes possible to shorten the write time and to reduce the number of data-rewriting for the NAND flash memory 21 by means of this method so that the rewriting operation needs to be performed only once, whereas the prior art method normally takes more operations. Accordingly, it is possible to prolong the life of the flash memory. Fig. 18 diagrammatically shows a state in which the data being written in the physical segments correlating with the virtual segment number "2" and the virtual segment number "5", for which the queue value "0" is set, are transferred to the side of the NAND flash memory 21.

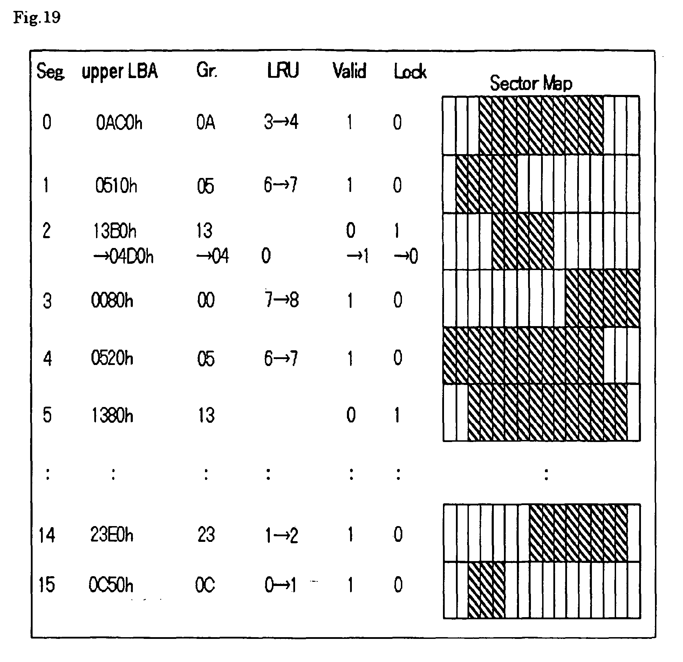

It is noted that the records in the virtual segment number "2" and the virtual segment number "5" are not erased at the time of the data transfer. However, because these data were already transferred towards the side of the NAND flash memory 21, the CPU 237 indicates this by setting "Valid = 0" in the records of the segments "2" and "5" in the tag memory 31 (Fig. 19). The entry "Valid = 0" means that the CPU 237 may handle the physical segment addresses "2" and "5" as empty physical segments. That is, as long as Valid = "0" (invalid) is set, the CPU 237 must take care that the setting of Lock = 1 (overwrite is to be prohibited) and the value of upper LBA and group LBA of the pertinent virtual segment(s) in the tag memory 31 are all invalid. At the time when the data transfer towards the side of the NAND flash memory 21 is completed, the queue value set for the virtual segment is canceled in the tag memory 31 (This is the stage in which both of the queue value and the LRU No. are not set).

Assume, after that, a host LBA ("04D4h") is specified and such a command is issued as writing data of 5 sectors. Here, the CPU 237 makes the tag memory retrieving/updating circuit 34 retrieve the tag memory 31 again. Then, the CPU 237 shall recognize that there is no virtual segment having the same upper LBA and both of the virtual segment number "2" and the virtual segment number "5" for which the data purge was already executed are empty segments (invalid (Valid Value = "0")). This is a case that the write-commanded data can this time be written to only one empty physical segment. In such a case, the CPU 237 may write the new data to the physical segment address "2" according to the previously determined rule so as to write such new data beginning from a smallest empty physical segment address (Fig. 19). In this case (writing new data after data purge), when the SSD 2 receives the write-command data from the host 1, the CPU 237 firstly erases the data writing status concerning the virtual segment number "2" recorded in the sector map of the sector memory 32. Then, the ATA interface controlling section 231 sends a status signal indicating that the data transfer is OK to the host 1 according to the command from the CPU 237. Then, the host 1 transfers the data being saved in its buffer (not shown) to the side of the SSD 2. The CPU 237 makes the SDRAM controller 234 store the data transferred from the ATA interface controlling section 231 in the physical segment which is the basis of the records of the virtual segment number "2", i.e. physical segment address "2" hereof.

When the data are stored in the physical segment address "2", the CPU 237 changes the data of the physical segment address "2" to valid (value = "1"), and changes "Lock = 1" to "Lock = 0" (it means "not the queue state"), and sets the LRU No. to "0" for the virtual segment of the physical segment address "2", and changes the upper LBA to "04DDh" and the group LBA to "04" and records them in the tag memory 31. Further, the CPU 237 adds a "1" to each LRU No. of data-valid-virtual-segments, and the added LRU Nos. are recorded into the tag memory 31. Fig. 19 shows this diagrammatically.

The Queue value(s) can be set as follows. For example, at the time when the data writing to the cache memory 22 exceeds the number of physical segments (threshold value), it is possible to set a queue value "0" for the virtual segment which has the largest LRU No., and to execute purge of data from a physical segment corresponding to the virtual segment for which the Queue value "0" is set. Then, a new queue value "1" is set to a particular virtual segment at the time just before the data transfer of Queue "0" towards the side of the NAND flash memory 21 is completed. By means of this method, there always exists only one (1) queue of which data are to be transferred towards the side of the NAND flash memory 21 and queue waiting for the data transfer may be minimized (only one queue) by repeating this operation. In other words, it is possible to optimize the duty cycle of the data writing to the NAND flash memory 21.

In a case that a multiple queue value is set, other queue values are decreased respectively by one (1) every time when the data transfer of queue "0" is completed, the CPU 237 can find the number of queues of which data is not completely transferred towards the side of the NAND flash memory 21 by subtracting the number of queues of which data was purged from the number of queue value set up.

That is, every time when a queue value is set, the CPU 237 counts a pointer named "Host-Queue-Pointer". The data of the queue whose value is smallest has priority in sequential data-transferring procedure to the NAND flash memory 21, so every time when this data-transfer is completed, the CPU 237 counts a pointer named "Disk-Queue-Pointer". Total Disk-Queue-Pointer corresponds to the number of Queues of which data was transferred towards the side of the NAND flash memory 21, so that a value obtained by subtracting the value of the Disk-queue-Pointer from the value of the Host-Queue-Pointer becomes the number of queues of which data has not been purged from the cache memory 22. The CPU 237 may utilize this value for the purpose of controlling the data purge towards the side of the NAND flash memory 21.

Please note, there is a specific case that data sent from the host have to be written with crossing two logical blocks of the NAND flash memory 21. In this case, the data have to be written crossing two physical segments by suitably dividing. For example, in a case that, data whose host LBA is "0AF0h" and whose length is 32 sectors are to be written to the cache memory 22, the group LBA of the first half of the data becomes "0A" and the group LBA of the second half becomes "0B".

While the detail of the method of the invention has been described above, its basic method (points) will be put in order here.

1. On and after the system is turned ON, if the write command is issued by the host, the data are written sequentially from the head physical segment of the cache memory and the data writing status of the physical segment is recorded in its correlated virtual segment.

2. The physical segment data for which the rewriting object block of the flash memory is same are managed as a same LRU group.

3. If overwrite of data is allowable, this work takes first priority.

4. If overwrite of data is not allowable, the data are stored in the next physical segment of the cache memory.

5. If the data are filled in the cache memory up to a predetermined threshold, data purge is executed on the basis of a queue value being set for those virtual segments whose LRU number is largest. This data-transfer towards the flash memory is carried out on the basis of information being recorded in both, a tag memory and the sector memory.

6. If an empty physical segment of the cache memory is created by such data purge, writing of new data to it is executed.

7. The above mentioned routine is executed until the data write command from the host ends and the whole cache memory data becomes empty (when the data write command from the host stops, the CPU transfers the remaining data from the cache memory towards the side of the NAND flash memory automatically).

**Claims**

1. A data writing method for writing data from a host (1) into a flash memory (21) in accordance with a write command, wherein the data sent from the host are saved in a cache memory (22) before they are written into the NAND flash memory, **characterized by** comprising steps of:

   1) recording, in at least one virtual segment that is identified by a virtual segment number and starting with a segment number "0", the writing status of data which are to be written into the physical segments of the cache memory (22) pursuant to a first write-command issued from the host after the data writing system has been turned ON, and

   a) recording an upper LBA (Logical Block Address) and a group LBA of the written data in a tag memory (31) in correlation with the virtual segment number;
   b) recording, in the tag memory (31) and in correlation with the virtual segment number, the fact that the data related to the virtual segment number are valid; and
   c) setting an LRU (Least Recently Used) number for the virtual segment and recording the LRU number in the tag memory (31);

   2) when a subsequent data write command is issued from the host, said write command specifying further write data having an upper LBA, searching the tag memory (31); and

   a) when there is found a virtual segment having the same upper LBA as the further data,

   a-1) overwriting the data that are related to that physical segment; and
   a-2) for all virtual segments whose LRU number is smaller than that of the found segment, incrementing the LRU number by one, setting the LRU number of the found segment to "0", and recording the updated LRU numbers in the tag memory;

   b) when there is no virtual segment having the same upper LBA as the further data and there is an empty virtual segment,

   b-1) executing data writing to the empty physical segment; and
   b-2) when there is no virtual segment having the same group LBA, setting to "0" the LRU number of a virtual segment corresponding to the physical segment to which the new data are written, and incrementing by one the LRU namers of all other existing virtual segment(s), if any, and recording the updated LRU numbers in the tag memory;
   b-3) when there is a virtual segment having the same group LBA, setting the LRU number of the virtual segment, into which the new data-writing-status is recorded, to the LRU number of said virtual segment having the same group LBA, incrementing by one the LRU numbers of all virtual segments whose LRU number is smaller than that of the virtual segments having the same group LBA, resetting the LRU numbers of the two segments that have the same group LBA to "0", and recording the updated LRU numbers in the tag memory;

   3) repeating step (2) until the data writing to the physical segments reaches a predetermined threshold value for the number of physical segments.

**2.** The data writing method according to claim 1, wherein the following steps are performed when the data writing to the physical segments has reached said thereshold value:

4-1) canceling the LRU numbers of all said virtual segments having the largest LRU number, and setting a queue value "0" for these segments, and recording the queue values in the tag memory;
4-2) transferring the data of all physical segments that are related to the virtual segments having the queue value "0" to the flash memory (21);
4-3) setting a new queue value "0" for the virtual segment(s) whose LRU number is then the largest.

**3.** The data writing method according to claim 2, wherein, immediately before executing the step 4-1), a "Lock" flag is set for the virtual segment(s) having the largest LRU number, and the flag is recorded in the tag memory, said "Lock" flag inhibiting overwriting of data in the physical segment that corresponds to the virtual segment.

**4.** The data writing method according to any one of claims 1 to 3, wherein the cache memory (22) is composed of an aggregate of physical segments whose size is the product of the size of one page sector of the flash memory and an m-th power of 2, wherein m is 0 or a positive integer, and the status of data writing to each physical segment is recorded and managed in units of sectors by means of a CPU (237).

**Patentansprüche**

**1.** Verfahren zum Schreiben von Daten von einem Host (1) in einen Flash-Speicher (21) in Übereinstimmung mit einem Schreibbefehl, wobei die vom Host gesendeten Daten in einem Cache-Speicher (22) gesichert werden, bevor sie in den NAND Flash-Speicher geschrieben werden, **gekennzeichnet durch** die folgenden Schritte:

1) Aufzeichnen, in wenigstens einem virtuellen Segment, das **durch** eine mit einer Segmentnummer "0" beginnende virtuelle Segmentnummer identifiziert wird, des Schreibstatus von Daten, die gemäß einem ersten Schreibbefehl, der vom Host ausgegeben wird, nachdem das Datenschreibsystem eingeschaltet worden ist, in die physikalischen Segmente des Cache-Speichers (22) zu schreiben sind, und

a) Aufzeichnen einer oberen LBA (Logische Block-Adresse) und einer Gruppen-LBA der geschriebenen Daten in einem Tag-Speicher (31) in Korrelation mit der virtuellen Segmentnummer,
b) Aufzeichnen, in dem Tag-Speicher (31) und in Korrelation mit der virtuellen Segmentnummer, der Tatsache, dass die zu der virtuellen Segmentnummer gehörenden Daten gültig sind, und
c) Setzen einer LRU (Least Recently Used - zuletzt benutzt) -Nummer für das virtuelle Segment, und Aufzeichnen der LRU-Nummer in dem Tag-Speicher (31),

2) wenn von dem Host ein nachfolgender Datenschreibbefehl ausgegeben wird, der weitere Schreibdaten spezifiziert, die eine obere LBA haben: Durchsuchen des Tag-Speichers (31), und

a) wenn eine virtuelle Segmentnummer gefunden wird, die dieselbe obere LBA hat wie die weiteren Daten,

a-1) Überschreiben der Daten, die zu diesem physikalischen Segment gehören, und
a-2) für alle virtuellen Segmente, deren LRU-Nummer kleiner ist als die des gefundenen Segments: Erhöhen der LRU-Nummer um eins, setzen der LRU-Nummer des gefundenen Segments auf "0", und Aufzeichnen der aktualisierten LRU-Nummern in dem Tag-Speicher,

b) wenn es kein virtuelles Segment gibt, das dieselbe obere LBA hat wie die weiteren Daten, und ein leeres virtuelles Segment vorhanden ist:

b-1) Schreiben der Daten in das leere physikalische Segment, und
b-2) wenn es kein virtuelles Segment gibt, das dieselbe Gruppen-LBA hat, Setzen der LRU-Nummer eines virtuellen Segments, das dem physikalischen Segment entspricht, in das die neuen Daten geschrieben werden, auf "0" und Erhöhen der LRU-Nummern aller anderen existierenden virtuellen Segmente, soweit vorhanden, um eins, und Aufzeichnen der aktualisierten LRU-Nummern im Tag-Speicher,
b-3) wenn es ein virtuelles Segment gibt, das dieselbe Gruppen-LBA hat: Setzen der LRU-Nummer des virtuellen Segments, in dem der neue Datenschreibstatus aufgezeichnet wird, auf die LRU-Nummer jenes virtuellen Segments, das dieselbe Gruppen-LBA hat, Erhöhen der LRU-Nummern aller virtuellen Segmente, deren LRU-Nummer kleiner ist als die des virtuellen Segments, das dieselbe Gruppen-LBA hat, um eins, Setzen der LRU-Nummern der beiden Segmente, die dieselbe Gruppen LBA haben, auf "0", und Aufzeichnen der aktualisierten LRU Nummern in dem Tag-Speicher,

3) Wiederholen von Schritt (2), bis das Schreiben der Daten in die physikalischen Segmente einen vorgegebenen Schwellenwert für die Anzahl der physikalischen Segmente erreicht.

**2.** Verfahren nach Anspruch 1, bei dem die folgenden Schritte ausgeführt werden, wenn das Schreiben von Daten in die physikalischen Segmente den vorgegebenen Schwellenwert erreicht hat:

4-1) Löschen der LRU-Nummern all jener virtuellen Segmente, die die größte LRU-Nummer haben, und Setzen eines Zählers für diese Segmente auf "0", und Aufzeichnen der Zähler im Tag-Speicher,
4-2) Übertragen der Daten aller physikalischen Segmente, die zu den virtuellen Segmenten mit dem Zähler "0" gehören, in den Flash-Speicher (21),
4-3) Setzen eines neuen Zählers für die virtuellen Segmente, deren LRU-Nummer dann am größten ist, auf "0".

**3.** Verfahren nach Anspruch 2, bei dem unmittelbar vor der Ausführung des Schrittes 4-1) ein Flag "Sperren" für die virtuellen Segmente gesetzt wird, die die größte LRU-Nummer haben, und das Flag im Tag-Speicher gespeichert wird, wobei das Flag "Sperren" das Überschreiben von Daten in dem physikalischen Segment verbietet, das dem virtuellen Segment entspricht.

**4.** Verfahren nach einem der Ansprüche 1 bis 3, bei dem der Cache-Speicher (22) aus einem Aggregat physikalischer Segmente aufgebaut ist, deren Größe das Produkt aus der Größe eines Seitensektors des Flash-Speichers und einer m-ten Potenz von 2 ist, wobei n gleich 0 oder eine positive ganze Zahl ist, und der Datenschreibstatus für jedes physikalische Segment mit Hilfe einer CPU (237) in Einheiten von Sektoren aufgezeichnet und verwaltet wird.

## Revendications

**1.** Procédé d'écriture de données pour écrire des données depuis un hôte (1) dans une mémoire flash (21) conformément à une instruction d'écriture, dans lequel les données envoyées par l'hôte sont sauvegardées dans une mémoire cache (22) avant d'être écrites dans la mémoire flash NON-ET, **caractérisé en ce qu'**il comporte les étapes consistant à :

1) enregistrer, dans au moins un segment virtuel qui est identifié par un numéro de segment virtuel et commençant par un numéro de segment "0", l'état d'écriture de données qui sont écrites dans les segments physiques de la mémoire cachent (22) à la suite d'une première instruction d'écriture émise par l'hôte après que le système d'écriture de données ait été mis sous tension, et

a) enregistrer une adresse de bloc logique (LBA) supérieure et un groupe d'adresses LBA des données écrites dans une mémoire de labels (31) en corrélation avec le numéro de segment virtuel,
b) enregistrer, dans la mémoire de labels (31) et en corrélation avec le numéro de segment virtuel, le fait que les données associées au numéro de segment virtuel sont valides ; et
c) définir un numéro utilisé le plus anciennement (LRU) pour le segment virtuel et enregistrer le numéro LRU dans la mémoire de labels (31),

2) lorsque une instruction d'écriture de données ultérieure est émise par l'hôte, ladite instruction d'écriture spécifiant des données d'écriture supplémentaires ayant une adresse LBA supérieure, effectuer une recherche dans la mémoire de labels (31), et

a) lorsqu'un segment virtuel ayant la même adresse LBA supérieure que les données supplémentaires est trouvé,

a-1) remplacer les données qui sont associées à ce segment physique, et
a-2) pour tous les segments virtuels dont le numéro LRU est inférieur à celui du segment trouvé, incrémenter le numéro LRU de un, définir le numéro LRU du segment trouvé à "0", et enregistrer les numéros LRU mis à jour dans la mémoire de labels,

b) lorsqu'il n'existe pas de segment virtuel ayant la même adresse LBA supérieure que les données supplémentaires et qu'il n'existe pas de segment virtuel vide,

> b-1) exécuter l'écriture de données dans le segment physique vide, et
> b-2) lorsqu'il n'existe pas de segment virtuel ayant le même groupe d'adresses LBA, définir à "0" le numéro LRU d'un segment virtuel correspondant au second physique dans lequel les nouvelles données sont écrites, et incrémenter de un les numéros LRU de tous les autres segments virtuels existants, le cas échéant, et enregistrer les numéros LRU mis à jour dans la mémoire de labels,
> b-3) lorsqu'il n'existe pas de segment virtuel ayant le même groupe d'adresses LBA, définir le numéro LRU du segment virtuel, dans lequel le nouvel état d'écriture de données est enregistré, au numéro LRU dudit segment virtuel ayant le même groupe d'adresses LBA, incrémenter de un les numéros LRU de tous les segments virtuels dont le numéro LRU est inférieur à celui des segments virtuels ayant le même groupe d'adresses LBA, réinitialiser les numéros LRU des deux segments qui ont le même groupe d'adresses LBA à "0", et enregistrer les numéros LRU mis à jour dans la mémoire de labels,

3) répéter l'étape (2) jusqu'à ce que l'écriture de données dans les segments physiques atteigne une valeur de seuil prédéterminée pour le nombre de segments virtuels.

**2.** Procédé d'écriture de données selon la revendication 1, dans lequel les étapes suivantes sont exécutées lorsque l'écriture de données dans les segments physiques a atteint ladite valeur de seuil :

> 4-1) annuler les numéros LRU de tous lesdits segments virtuels ayant le numéro LRU le plus grand, et définir une valeur de file d'attente "0" pour ces segments, et enregistrer les valeurs de file d'attente dans la mémoire de labels,
> 4-2) transférer les données de tous les segments physiques qui sont associés aux segments virtuels ayant la valeur de file d'attente égale à "0" vers la mémoire flash (21),
> 4-3) définir une nouvelle valeur de file d'attente "0" pour le ou les segments virtuels dont le numéro LRU est ensuite le plus grand.

**3.** Procédé d'écriture de données selon la revendication 2, dans lequel, immédiatement avant l'exécution de l'étape 4-1), un indicateur " verrouillage" est défini pour le ou les segments virtuels ayant le numéro LRU le plus grand, et l'indicateur est enregistré dans la mémoire de labels, ledit indicateur "verrouillage" empêchant le remplacement de données dans le segment physiques qui correspond au segment virtuel.

**4.** Procédé d'écriture de données selon l'une quelconque des revendications 1 à 3, dans lequel la mémoire cache (22) est constituée d'un agrégat de segments physiques dont la taille est le produit de la taille d'un secteur de page de la mémoire flash et d'une $m^{ème}$ puissance de 2, dans lequel m est égal à 0 ou est un nombre entier positif, et l'état d'écriture de données pour chaque segment physique est enregistré et géré dans des unités de secteurs par l'intermédiaire d'une unité centrale de traitement (CPU) (237).

Fig.1

block construction           page construction         data region

| Block 0 |
| Block 1 |
| Block 2 |
| Block 3 |
| Block 4 |
| Block 5 |
| Block 6 |
| Block 7 |
| Block 8 |
| Block 9 |

| Block 8187 |
| Block 8188 |
| Block 8189 |
| Block 8190 |
| Block 8191 |

| Page 0 |
| Page 1 |
| Page 2 |
| Page 3 |
| Page 4 |

| Page 59 |
| Page 60 |
| Page 61 |
| Page 62 |
| Page 63 |

| sector  S0 |
| sector  S1 |
| sector  S2 |
| sector  S3 |

Fig.2

Fig.3

Fig.4

rewriting object block          write block

Fig.5

| rewriting object block | sector | buffer |
|---|---|---|

| P0 |
| P1 |
| P2 |
| P3 |
| P4 |
| P5 |
| P6 |
| ⋮ |

| S0 |
| S1 |
| S2 |
| S3 |

| S0 |

Fig.6

write block    sector    transferred data in Fig.5

SO is composed with host data.

host data

Data less than one page size
may not be written as is.

Fig.7

rewriting object block          sector          buffer

Fig.8

write block

| P0 |
| P1 |
| P2 |
| P3 |
| P4 |
| P5 |
| P6 |
| P7 |
| P8 |
| P9 |
| P10 |
| P11 |
| P12 |
| ⋮ |

sector

| S0 |
| S1 |
| S2 |
| S3 |

transferred data in Fig.7

| S1 |
| S2 |
| S3 |

S1∼S3 are composed
with host data.

Fig.9

rewriting object block          write block

Fig.10

(a) small block

| data region (512byte) |
|---|
| redundant region (16byte) |

} 1ECC sector

(b) large block

| data region (512byte) |
|---|
| redundant region (16byte) |

} 1ECC sector

| data region (512byte) |
|---|
| redundant region (16byte) |

} 1ECC sector

| data region (512byte) |
|---|
| redundant region (16byte) |

} 1ECC sector

| data region (512byte) |
|---|
| redundant region (16byte) |

} 1ECC sector

Fig.11

Fig.12

tag memory

( upper LBA,
LRU, Valid,
lock )

31

tag memory retrieving /
updating circuit

33

register

bus (APB)

232

sector memory

(Sector Map )

sector memory retrieving
/updating circuit

30

32

34

236

Fig.13

| Seg. | upper LBA | Gr. | LRU | Valid | Lock | Sector Map |
|------|-----------|-----|-----|-------|------|------------|
| 0 | 0AC0h | 0A | 0 | 1 | 0 | |
| 1 | | | | 0 | 0 | |
| 2 | | | | 0 | 0 | |
| 3 | | | | 0 | 0 | |
| 4 | | | | 0 | 0 | |
| 5 | | | | 0 | 0 | |
| : | | | | : | : | : |
| 14 | | | | 0 | 0 | |
| 15 | | | | 0 | 0 | |

Fig.14

| Seg. | upper LBA | Gr. | LRU | Valid | Lock | Sector Map |
|------|-----------|-----|-----|-------|------|------------|
| 0 | 0AC0h | 0A | 3 | 1 | 0 | |
| 1 | 0510h | 05 | 2 | 1 | 0 | |
| 2 | 13B0h | 13 | 1 | 1 | 0 | |
| 3 | 0080h | 00 | 0 | 1 | 0 | |
| 4 | | | | 0 | 0 | |
| 5 | | | | 0 | 0 | |
| ⋮ | | | | ⋮ | ⋮ | ⋮ |
| 14 | | | | 0 | 0 | |
| 15 | | | | 0 | 0 | |

Fig.15

| Seg. | upper LBA | Gr. | LRU | Valid | Lock | Sector Map |
|------|-----------|-----|-----|-------|------|------------|
| 0 | 0AC0h | 0A | 3 | 1 | 0 | |
| 1 | 0510h | 05 | 2→0 | 1 | 0 | |
| 2 | 13B0h | 13 | 1→2 | 1 | 0 | |
| 3 | 0080h | 00 | 0→1 | 1 | 0 | |
| 4 | 0520h | 05 | 2→0 | 1 | 0 | |
| 5 | | | | 0 | 0 | |
| : | | | | : | : | : |
| 14 | | | | 0 | 0 | |
| 15 | | | | 0 | 0 | |

Fig.16

| Seg. | upper LBA | Gr. | LRU | Valid | Lock | Sector Map |
|------|-----------|-----|-----|-------|------|------------|
| 0 | 0AC0h | 0A | 3 | 1 | 0 | |
| 1 | 0510h | 05 | 6 | 1 | 0 | |
| 2 | 13B0h | 13 | 8 | 1 | 0 | |
| 3 | 0080h | 00 | 7 | 1 | 0 | |
| 4 | 0520h | 05 | 6 | 1 | 0 | |
| 5 | 1380h | 13 | 8 | 1 | 0 | |
| : | : | : | : | : | : | : |
| 14 | 23E0h | 23 | 1 | 1 | 0 | |
| 15 | 0C50h | 0C | 0 | 1 | 0 | |

Fig.17

| Seg | upper LBA | Gr. | LRU | Queue | Valid | Lock | Sector Map |
|---|---|---|---|---|---|---|---|
| 0 | 0AC0h | 0A | 3 | | 1 | 0 | |
| 1 | 0510h | 05 | 6 | | 1 | 0 | |
| 2 | 13B0h | 13 | 8 → | 0 | 1 | 0→1 | |
| 3 | 0080h | 00 | 7 | | 1 | 0 | |
| 4 | 0520h | 05 | 6 | | 1 | 0 | |
| 5 | 1380h | 13 | 8 → | 0 | 1 | 0→1 | |
| : | : | : | : | | : | : | : |
| 14 | 23E0h | 23 | 1 | | 1 | 0 | |
| 15 | 0C50h | 0C | 0 | | 1 | 0 | |

Fig.18

| Seg | upper LBA | Gr. | LRU | Queue | Valid | Lock | Sector Map |
|-----|-----------|-----|-----|-------|-------|------|------------|
| 0 | 0AC0h | 0A | 3 | | 1 | 0 | |
| 1 | 0510h | 05 | 6 | | 1 | 0 | |
| 2 | 13B0h | 13 | | 0 | 1 | 1 | |
| 3 | 0080h | 00 | 7 | | 1 | 0 | |
| 4 | 0520h | 05 | 6 | | 1 | 0 | |
| 5 | 1380h | 13 | | 0 | 1 | 1 | |
| : | : | : | : | | : | : | : |
| 14 | 23E0h | 23 | 1 | | 1 | 0 | |
| 15 | 0C50h | 0C | 0 | | 1 | 0 | |

Fig.19

| Seg. | upper LBA | Gr. | LRU | Valid | Lock | Sector Map |
|------|-----------|-----|-----|-------|------|------------|
| 0 | 0AC0h | 0A | 3→4 | 1 | 0 | |
| 1 | 0510h | 05 | 6→7 | 1 | 0 | |
| 2 | 13B0h →04D0h | 13 →04 | 0 | 0 →1 | 1 →0 | |
| 3 | 0080h | 00 | 7→8 | 1 | 0 | |
| 4 | 0520h | 05 | 6→7 | 1 | 0 | |
| 5 | 1380h | 13 | | 0 | 1 | |
| : | : | : | : | : | : | : |
| 14 | 23E0h | 23 | 1→2 | 1 | 0 | |
| 15 | 0C50h | 0C | 0→1 | 1 | 0 | |

Fig.20

seg.

Host 1

data { Host LBA / Data length

**NAND flash memory** 21

LBA (logical block address)    PBA (physical block address)

Virtual segment (sector memory)

Physical segment (cashe memory)

"logical block – physical block conversion table"

**EP 2 056 203 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000349853 A
- JP 2001273776 A
- JP 2006323739 A
- US 2004186946 A1
- WO 2004059651 A